# EUROPEAN PATENT APPLICATION

(11) **EP 4 672 558 A1**
(43) Date of publication of application: **31.12.2025**
(21) Application number: 24791831.1
(22) Date of filing: 28.03.2024
(51) Int. Cl.: H02K 1/12

(54) **ELECTRIC TOOL AND MOTOR**

(30) Priority: 18.04.2023 CN 202310413929; 14.03.2024 CN 202410294895
(71) Applicant: Nanjing Chervon Industry Co., Ltd., Nanjing, Jiangsu 211106 (CN)
(72) Inventor: GUAN, Jianyou, Nanjing, Jiangsu 211106 (CN); HU, Chenglong, Nanjing, Jiangsu 211106 (CN)
(74) Representative: Sun, Yiming
(86) International application number: PCT/CN2024/084458
(87) International publication number: WO 2024/217245

(57) **Abstract**

Provided is a power tool, which belongs to the technical field of tools. The power tool includes an electric motor and a power supply device. The electric motor is configured to power the power tool. The electric motor includes a stator and a rotor that rotates relative to the stator and is at least partially disposed on the outer side of the stator. The power supply device is configured to supply electric energy to the electric motor. The diameter of the rotor is greater than or equal to 50 mm and less than or equal to 105 mm, and the ratio of the rated torque of the electric motor to the mass of the electric motor is higher than or equal to 4 N·m/kg. A relatively large armature diameter of the electric motor allows the electric motor to have a greater torque capacity, and the total mass of the electric motor is controlled to be relatively light in conjunction with the weight reduction design. With the two designs, the electric motor has a relatively high torque density and a relatively high power density so that the heavy load performance of the machine is improved and the weight of the whole machine is kept relatively light. Thus, the operation of the user is facilitated, and the electric motor has the advantages of miniaturization and a light weight.

## Description

This application claims priority to Chinese Patent Application No. 202310413929.6 filed with the China National Intellectual Property Administration (CNIPA) on Apr. 18, 2023 and Chinese Patent Application No. 202410294895.8 filed with the CNIPAon Mar. 14, 2024, the disclosures of which are incorporated herein by reference in their entireties.

### TECHNICAL FIELD

The present application relates to the technical field of tools and, in particular, to an electric motor applicable to power tools.

### BACKGROUND

A power tool is a tool that drives, through a transmission mechanism, a working head to work, and an electric motor is a power source for driving the transmission mechanism. Commonly used electric motors include an inrunner and an outrunner. At present, the outrunner used in a power tool has a relatively low torque density and a relatively low power density. If the heavy load performance is to be further improved on this basis, the electric motor needs to be larger and heavier. As a result, the machine is heavier and more difficult to hold.

This part provides background information related to the present application, and the background information is not necessarily the existing art.

### SUMMARY

An object of the present application is to solve or at least alleviate part or all of the preceding problems. To this end, one object of the present application is to provide a power tool, so as to improve the load-carrying performance of the machine and reduce the weight of the whole machine.

To achieve the preceding object, the present application adopts the technical solution described below. A power tool includes: an electric motor configured to power the power tool and including a stator and a rotor that rotates relative to the stator and is at least partially disposed on the outer side of the stator in the radial direction; and a power interface configured to be electrically connected to a power supply device to supply electric energy to the electric motor. The diameter of the rotor is greater than or equal to 50 mm and less than or equal to 105 mm, and the ratio of the rated torque of the electric motor to the mass of the electric motor is higher than or equal to 4 N·m/kg.

In some examples, the diameter of the rotor is greater than or equal to 80 mm and less than or equal to 95 mm, and the ratio of the rated torque of the electric motor to the mass of the electric motor is higher than or equal to 4 N·m/kg.

In some examples, the rated power of the electric motor is greater than or equal to 1000 W and less than or equal to 7000 W.

In some examples, the mass of the electric motor is greater than or equal to 0.8 kg and less than or equal to 2.4 kg.

In some examples, the stator includes a stator core and a first end cover, the first end cover is disposed at an end of the stator core, and the rotor is sleeved on the stator core.

In some examples, multiple heat dissipation holes are provided on the first end cover.

In some examples, multiple mounting holes are provided on the first end cover.

In some examples, the rotor includes a rotor core and a second end cover, the second end cover is disposed at an end of the rotor core, the second end cover includes several support legs, and the several support legs are spaced apart about the axis of the rotor.

In some examples, each of the multiple support legs is provided with a weight reduction hole.

In some examples, each of the multiple support legs has the shape of a leaf blade and is provided with an air guide surface.

In some examples, the second end cover includes a support disc located in the middle and a support ring located outside the support disc, one end of each of the multiple support legs is connected to the support disc, and the other end of each of the multiple support legs is connected to the support ring.

In some examples, the included angle between the extension direction of each of the multiple support legs and the radial direction of the second end cover is greater than or equal to 0 degrees and less than or equal to 45 degrees.

In some examples, each of the multiple support legs extends along a straight line or a curve from the support disc to the support ring.

An electric motor is applicable to power a power tool. The power tool includes a power supply device configured to supply electric energy to the electric motor. The electric motor includes a stator and a rotor that rotates relative to the stator and is at least partially disposed on the outer side of the stator. The diameter of the rotor is greater than or equal to 50 mm and less than or equal to 105 mm, and the ratio of the rated torque of the electric motor to the mass of the electric motor is higher than or equal to 4 N·m/kg.

The present application has the beneficial effects described below. The electric motor of the power tool proposed in the present application includes the stator and the rotor that rotates relative to the stator and is at least partially disposed on the outer side of the stator. The diameter of the rotor is greater than or equal to 50 mm and less than or equal to 105 mm, which is relatively large. In addition, the ratio of the rated torque of the electric motor to the mass of the electric motor is higher than or equal to 4 N·m/kg, which indicates that the electric motor has a relatively large rated torque and a reduced mass and has a relatively high torque density and a relatively high power density. Thus, the heavy load performance of the machine is improved and the weight of the whole machine is kept relatively light. Accordingly, the operation of a user is facilitated, and the electric motor has the advantages of miniaturization and a light weight.

### BRIEF DESCRIPTION OF DRAWINGS

FIG. 1 is a structural view of an electric motor according to an example of the present application.
FIG. 2 is a side view of the electric motor in FIG. 1.
FIG. 3 is side view two of the electric motor in FIG. 1.
FIG. 4 is a sectional view taken along A-A of FIG. 3.
FIG. 5 is exploded view one of the structure of the electric motor in FIG. 1.
FIG. 6 is a structural view of a stator in FIG. 5.
FIG. 7 is a structural view of a rotor in FIG. 5.
FIG. 8 is exploded view two of the structure of the electric motor in FIG. 1.
FIG. 9 is a structural view of a stator in FIG. 8.
FIG. 10 is another structural view of an electric motor according to an example of the present application.
FIG. 11 is a structural view of a second end cover in FIG. 10.
FIG. 12 is a side view of the electric motor in FIG. 10.
FIG. 13 is a structural view of an electric motor according to another example of the present application.
FIG. 14 is a side view of the electric motor in FIG. 13.
FIG. 15 is a side view of an electric motor according to another example of the present application.
FIG. 16 is a side view of a first end cover of the electric motor in FIG. 15.
FIG. 17 is a structural view of a chainsaw according to an example of the present application.
FIG. 18 is a structural view of a pruner according to an example of the present application.
FIG. 19 is a structural view of a mower according to an example of the present application.
FIG. 20 is a graph showing the comparison of the electrical performance of the electric motor in the present application with the electrical performance of a conventional electric motor.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

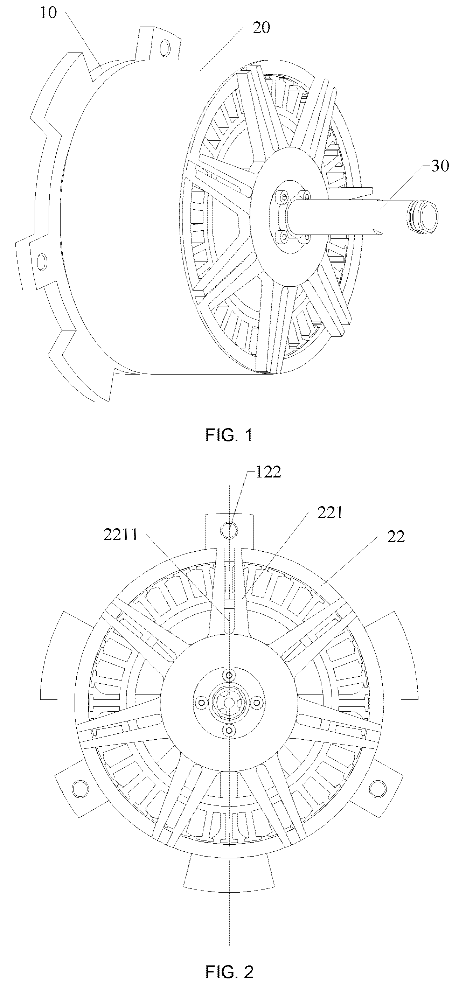

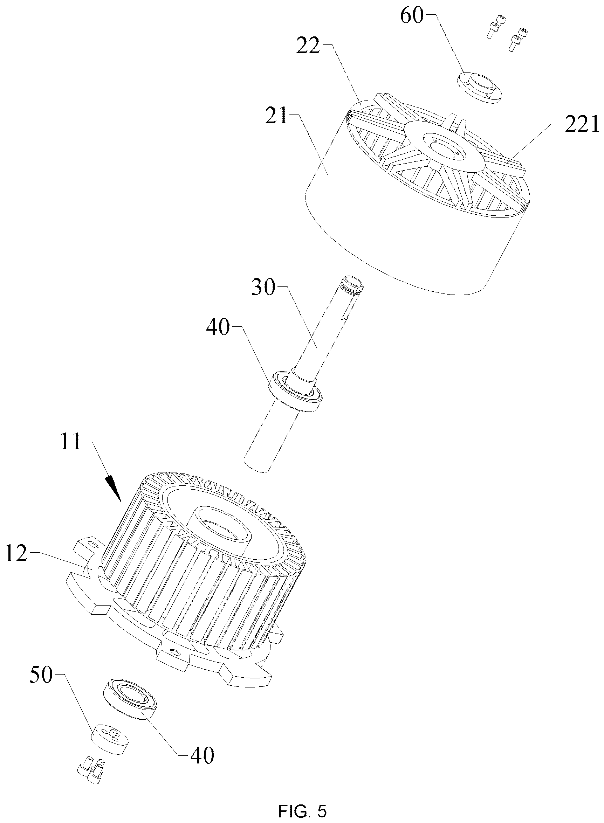

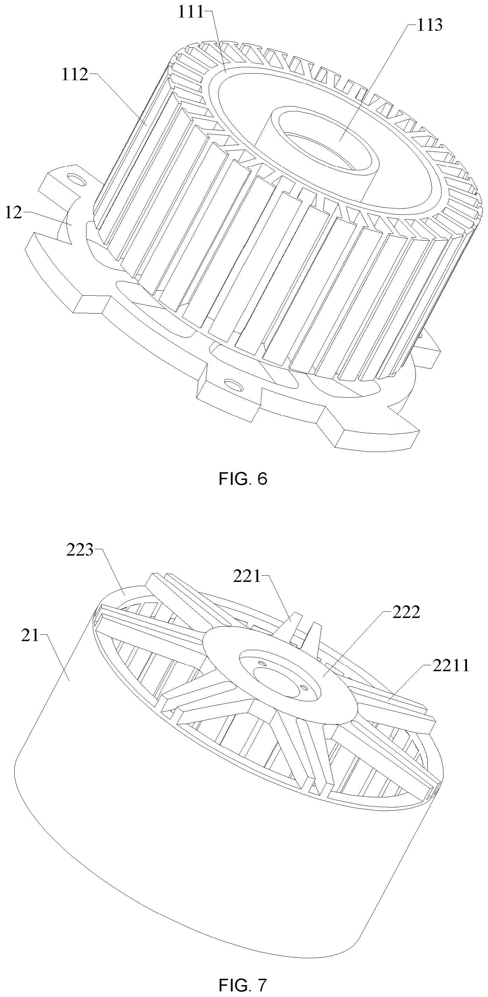

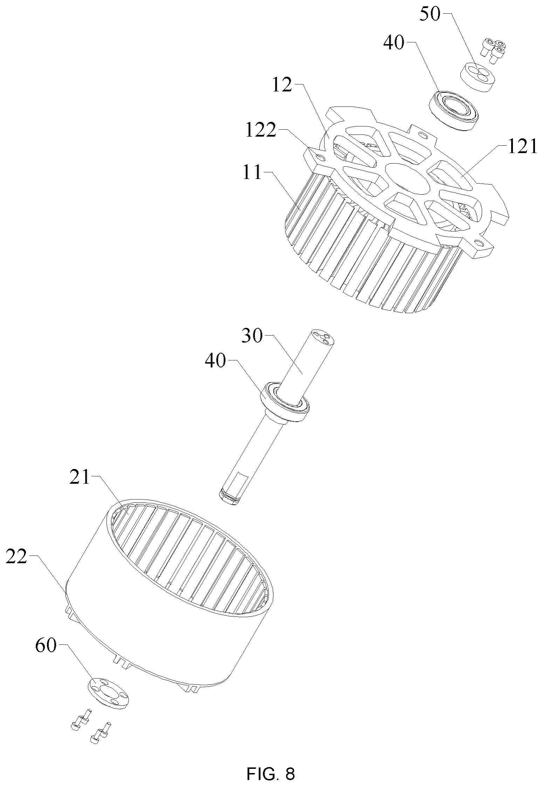

Referring to FIGS. 1 to 9, the present application provides an electric motor. The electric motor includes a housing and a stator 10 and a rotor 20 that are disposed in the housing. The rotor 20 is rotatable relative to the stator 10 and is at least partially disposed on the outer side of the stator 10 in the radial direction. In some examples, the diameter of the rotor 20 is greater than or equal to 50 mm and less than or equal to 105 mm, and the ratio of the rated torque of the electric motor to the mass of the electric motor is higher than or equal to 4 N·m/kg. In some examples, the diameter of the rotor 20 is greater than or equal to 80 mm and less than or equal to 95 mm, and the ratio of the rated torque of the electric motor to the mass of the electric motor is higher than or equal to 4 N·m/kg. It is to be noted that the rated torque of the electric motor in the present application refers to the maximum torque value that the electric motor can output at the rated power and the rated rotational speed.

In some examples, the diameter of the rotor 20 is greater than or equal to 65 mm and less than or equal to 105 mm. In some examples, the diameter of the rotor 20 is greater than or equal to 75 mm and less than or equal to 100 mm. In some examples, the diameter of the rotor 20 is greater than or equal to 80 mm and less than or equal to 95 mm. In some examples, the diameter of the rotor 20 may be 50 mm, 55 mm, 60 mm, 65 mm, 70 mm, 75 mm, 80 mm, 85 mm, 90 mm, 95 mm, 100 mm, or 105 mm.

In some examples, the ratio of the rated torque of the electric motor to the mass of the electric motor is higher than or equal to 4 N·m/kg and lower than or equal to 10 N·m/kg. In some examples, the ratio of the rated torque of the electric motor to the mass of the electric motor is higher than or equal to 4 N·m/kg and lower than or equal to 8 N·m/kg. In some examples, the ratio of the rated torque of the electric motor to the mass of the electric motor is higher than or equal to 4 N·m/kg and lower than or equal to 6 N·m/kg. In some examples, the ratio of the rated torque of the electric motor to the mass of the electric motor is higher than or equal to 4.5 N·m/kg and lower than or equal to 5.5 N·m/kg. In some examples, the ratio of the rated torque of the electric motor to the mass of the electric motor is equal to 4 N·m/kg, 4.5 N·m/kg, 5 N·m/kg, 5.2 N·m/kg, 5.5 N·m/kg, 5.8 N·m/kg, 6 N·m/kg, 6.5 N·m/kg, 7 N·m/kg, 7.5 N·m/kg, 8 N·m/kg, 8.5 N·m/kg, 9 N·m/kg, or 10 N·m/kg.

Thus, the electric motor is reasonably designed so that the electric motor has better performance and also has a relatively high torque density, that is, the ratio of the rated torque to the mass. Therefore, the electric motor has the relatively high torque density and a relatively high power density so that the heavy load performance of the machine is improved and the weight of the whole machine is kept relatively light. Thus, the operation of a user is facilitated, and the electric motor has the advantages of miniaturization and a light weight.

The electric motor further includes a rotating shaft 30 fixedly connected to the rotor 20. The rotating shaft 30 is inserted through the stator 10, and bearings 40 are disposed between the rotating shaft 30 and the stator 10. The two sets of bearings 40 are provided and distributed on the rotating shaft 30 at intervals. A limiting cover 50 is disposed at an end of the rotating shaft 30. The limiting cover 50 is detachably connected to the rotating shaft 30 and can limit a set of bearings 40. A limiting flange 60 is sleeved on the rotating shaft 30 and is fixedly connected to the rotor 20.

The stator 10 includes a stator core 11 and multiple windings disposed on the stator core 11. The stator 10 further includes a first end cover 12 disposed at an end of the stator core 11. Several mounting holes 122 are provided on the first end cover 12. The electric motor can be connected to other components through the mounting holes 122. In this example, several lugs are provided at the peripheral edge of the first end cover 12, and the mounting holes 122 are provided in the lugs.

Several heat dissipation holes 121 are provided on the first end cover 12. Thus, on one hand, the weight of the whole machine can be reduced. On the other hand, the heat dissipation holes 121 are provided so that the contact areas between the windings and the air are increased, thereby improving the heat dissipation capability. In this case, since the rated output power of the electric motor is increased and the weight of the electric motor is reduced, the power density of the electric motor is increased. Because the heat dissipation areas of the windings are increased, a fan on the electric motor may be removed according to the temperature rise result of an actual application working condition so that the axial dimension and weight of the electric motor can be reduced, thereby helping increase the power density of the electric motor.

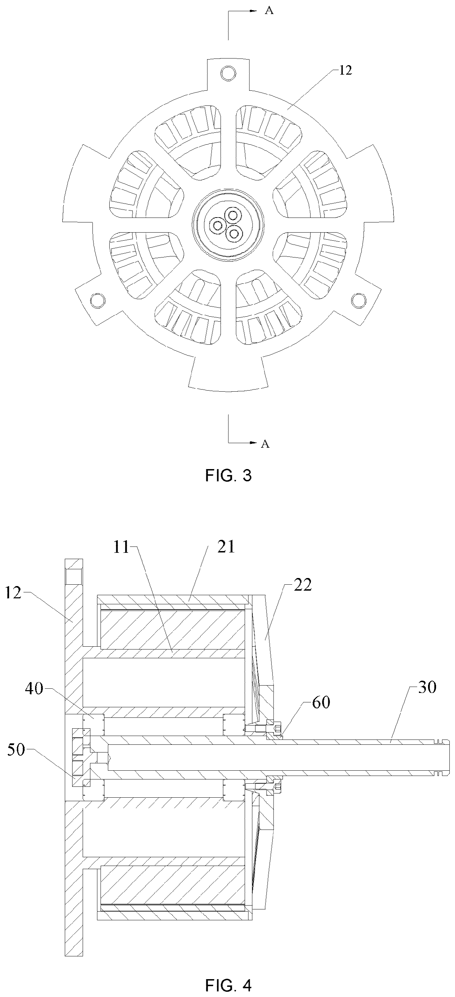

Referring to FIGS. 4 to 6, the stator core 11 includes a stator yoke 111 and stator teeth 112. The multiple stator teeth 112 are distributed at intervals around the peripheral surface of the stator yoke 111. A central hole 113 for accommodating the rotating shaft 30 is formed at the central position of the stator yoke 111. The stator yoke 111 can adopt a hollow structure due to a small magnetic flux, which does not affect the performance of the electric motor. Thus, the weight of the electric motor is reduced. In some examples, on the premise of meeting a torque transmission requirement, a hollow shaft may be adopted so that the weight is further reduced. For the windings, the slot fill factor of the windings may be increased and a thermally conductive material with high thermal conductivity may be adopted so that the torque density and the power density are improved.

The rotor 20 is sleeved on the stator core 11. The rotor 20 includes a rotor core 21 and multiple magnetic steels disposed on the rotor core 21. The rotor core 21 is sleeved on the stator core 11 in an annular manner. The rotor 20 further includes a second end cover 22. The second end cover 22 is disposed at an end of the rotor core 21 and includes several support legs 221. The several support legs 221 are spaced apart about the axis of the rotor 20. With the space between adjacent support legs 221, heat dissipation can be implemented and the weight can be reduced. A high-grade magnetic steel with high temperature resistance may be selected as the magnetic steel. Due to the fact that the magnetism is improved, the consumption of copper (enameled wires) and iron (silicon steel sheets) of the electric motor can be reduced so that the miniaturization and light weight of the electric motor are implemented.

Specifically, the second end cover 22 includes a support disc 222 located in the middle and a support ring 223 located outside the support disc 222. One end of each of the support legs 221 is connected to the support disc 222, and the other end of each of the support legs 221 is connected to the support ring 223. The support legs 221 function as connections and supports.

In a rotation process of the rotor core 21, the second end cover 22 is driven to rotate, and the support legs 221 cooperate with each other to function as a fan, thereby improving the heat dissipation function of the electric motor and helping increase the power density of the electric motor.

A weight reduction hole 2211 is provided on each of the support legs 221, which can reduce the weight of the whole machine on one hand and increase the heat dissipation area on the other hand. It is to be understood that materials of the rotor 20 are removed as much as possible on the premise that the mechanical strength of the electric motor is ensured, thereby reducing the weight of the electric motor. The first end cover 12 and the second end cover 22 may be made of a light and high-strength material, such as an aluminum alloy, a magnesium alloy, or a titanium alloy, to reduce the overall weight of the material.

In this example, the included angle between the extension direction of each of the support legs 221 and a radial direction of the second end cover 22 is equal to 0 degrees. That is, each of the support legs 221 extends along the radial direction of the second end cover 22, thereby facilitating machining and production.

The rated power of the electric motor is greater than or equal to 1000 W and less than or equal to 7000 W. The electric motor can have a relatively high power and meet various requirements. In some examples, the rated power of the electric motor is greater than or equal to 2000 W and less than or equal to 7000 W. In some examples, the rated power of the electric motor is greater than or equal to 3000 W and less than or equal to 6000 W. In some examples, the rated power of the electric motor may be 1000 W, 2000 W, 3000 W, 4000 W, 5000 W, 6000 W, or 7000 W.

The mass of the electric motor is greater than or equal to 0.8 kg and less than or equal to 2.4 kg. The electric motor has a reduced mass to meet the requirement for a light weight. In some examples, the mass of the electric motor is greater than or equal to 1 kg and less than or equal to 2 kg. In some examples, the mass of the electric motor is greater than or equal to 1.2 kg and less than or equal to 1.8 kg. In some examples, the mass of the electric motor may be 0.8 kg, 1.0 kg, 1.2 kg, 1.4 kg, 1.6 kg, 1.8 kg, 2.0 kg, 2.2 kg, or 2.4 kg.

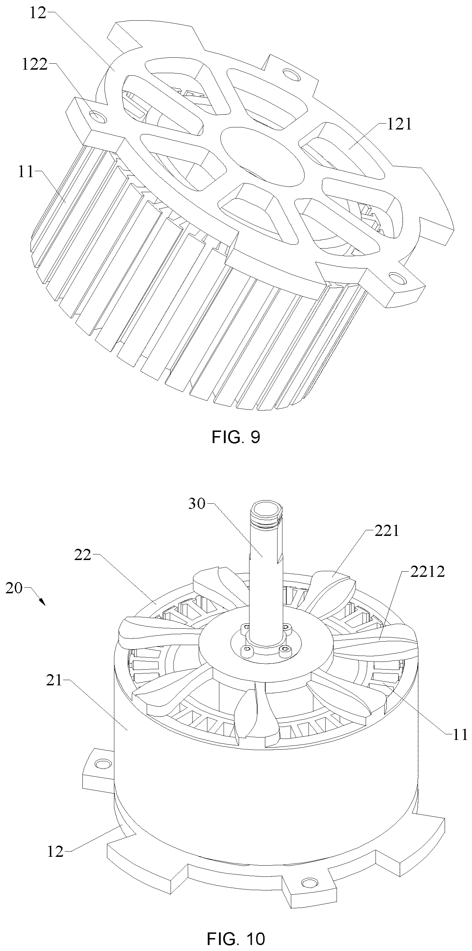

In some examples, referring to FIGS. 10 to 12, parts that are the same as or correspond to those in the preceding examples adopt corresponding reference numerals. For brevity, only the difference between the example and the preceding example is described below. The difference lies in that the support legs 221 has the shape of a leaf blade, and the support legs 221 are provided with air guide surfaces 2212. In the rotation process of the rotor 20, the support legs 221 cooperate with each other to function as a fan. Through the air guide surfaces 2212, an airflow can be driven to flow, thereby improving the heat dissipation function of the electric motor and helping increase the power density of the electric motor.

The support legs 221 have the shape of a leaf blade and may be streamlined. The air guide surfaces 2212 may be configured according to actual needs. The air guide surfaces 2212 may be configured to protrude from the support legs 221, or the support legs 221 may be rotated by a certain angle around the radial direction to be inclined so that the surfaces of the support legs 221 are used as the air guide surfaces 2212. The air guide surfaces 2212 may gradually increase from the inside to the outside along the radial direction to increase air guide areas.

For the second end cover 22, the support legs 221 extend along a curve or a straight line from the support disc 222 to the support ring 223 so that the areas of the air guide surfaces 2212 are increased and the air guide effect is improved.

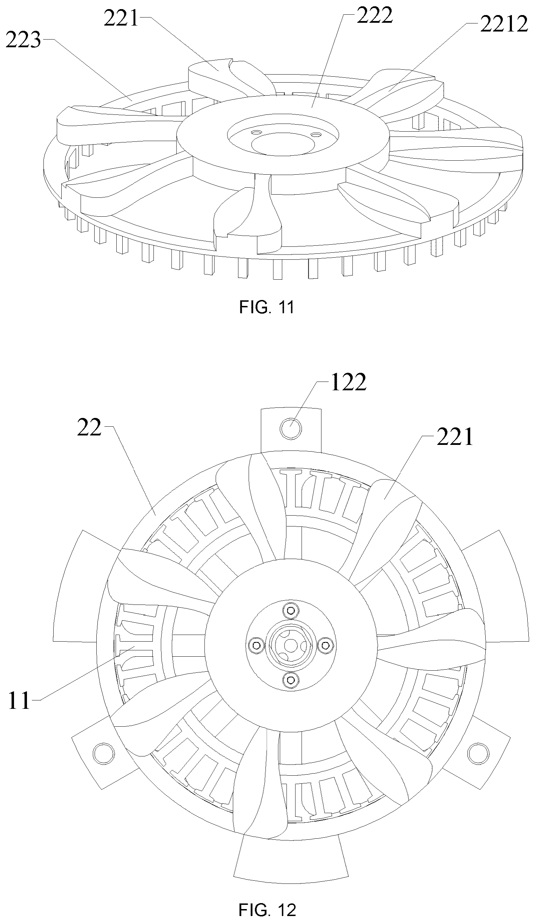

Referring to FIG. 11, the support legs 221 are provided on one side of the support ring 223, and several limiting protrusions are provided on the other side of the support ring 223. The limiting protrusions abut against the grooves of the rotor core 21 to play a limiting role.

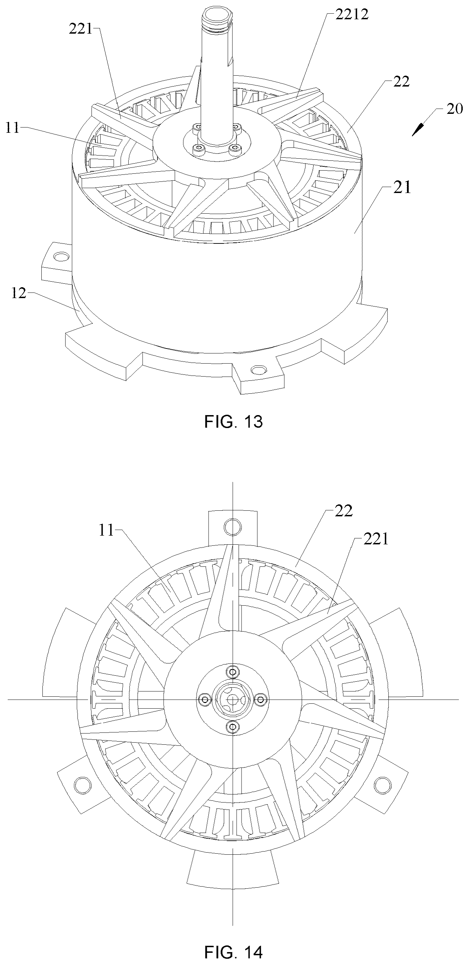

FIGS. 13 and 14 show another example. Parts that are the same as or correspond to those in the preceding examples adopt corresponding reference numerals in example one. For brevity, only the difference between the example and the preceding example is described below. The difference lies in that the included angle between the extension direction of each of the support legs 221 and the radial direction of the second end cover 22 is greater than or equal to 0 degrees and less than or equal to 45 degrees. The support legs 221 are configured to extend obliquely, and the lengths of the support legs 221 are increased. On one hand, the structural strength is increased, and on the other hand, the support legs 221 cooperate with each other to function as a fan. Thus, the heat dissipation function of the electric motor is improved, and the increase of the power density of the electric motor is facilitated.

The support legs 221 are provided with the air guide surfaces 2212. In the rotation process of the rotor 20, the support legs 221 cooperate with each other to function as a fan. Through the air guide surfaces 2212, an airflow can be driven to flow, thereby improving the heat dissipation function of the electric motor and helping increase the power density of the electric motor.

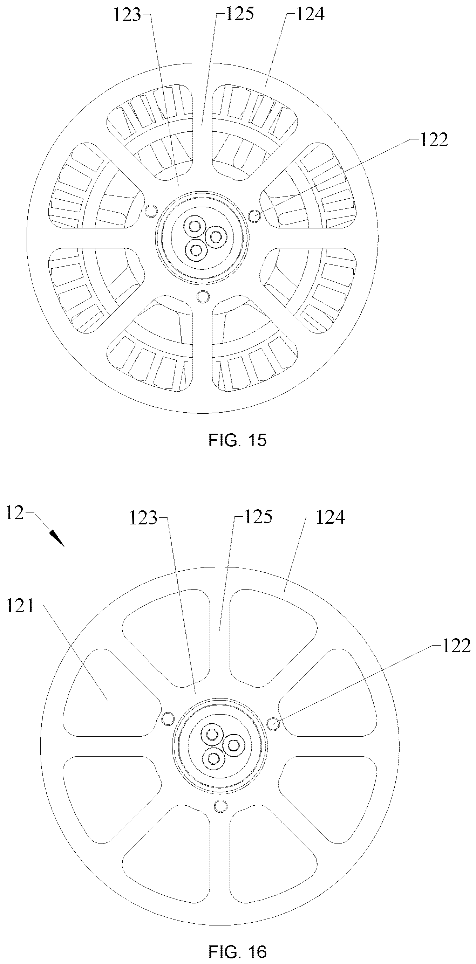

FIGS. 15 and 16 show another example, and parts that are the same as or correspond to those in the preceding examples adopt corresponding reference numerals. For brevity, only the difference between the example and the preceding example is described below. The difference lies in that the first end cover 12 is disc-shaped, the several heat dissipation holes 121 are evenly distributed about the axis of the first end cover 12 at intervals, and the mounting holes 122 are distributed on an end surface of the first end cover 12 so that the structure of the first end cover 12 is simplified and the weight of the first end cover 12 is reduced.

Specifically, the first end cover 12 includes a first support portion 123 located in the middle and a second support portion 124 located on the periphery. The heat dissipation holes 121 are provided between the first support portion 123 and the second support portion 124. A support rod 125 is formed between adjacent heat dissipation holes 121. One end of the support rod 125 is connected to the first support portion 123, and the other end of the support rod 125 is connected to the second support portion 124. The mounting holes 122 are provided on the first support portion 123.

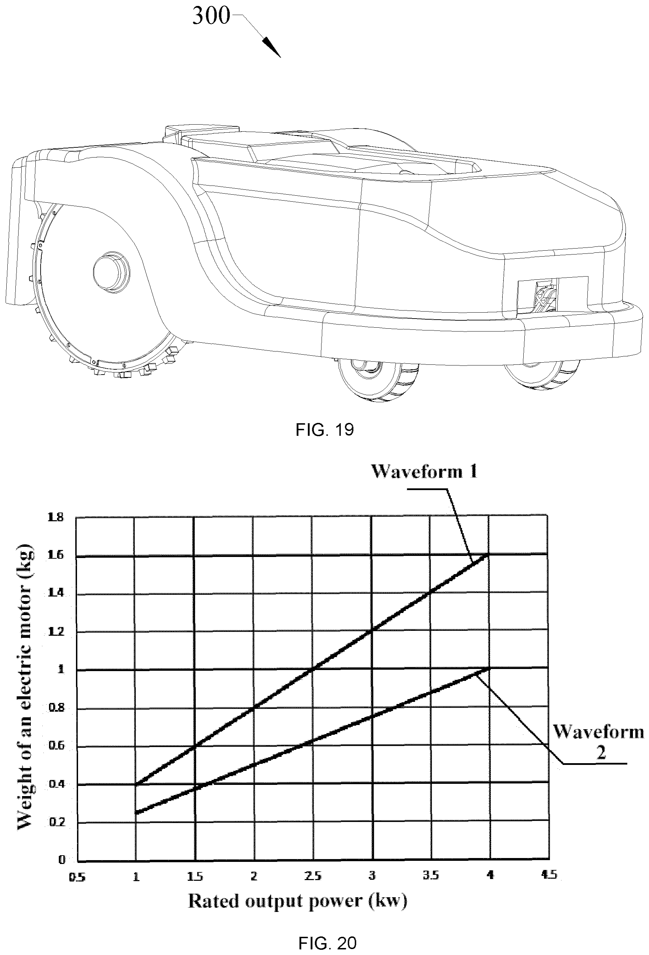

FIG. 20 shows the performance of an electric motor commonly used in the field of electric motors and power tools disclosed in the present application, where the rated output power shown by the abscissa in FIG. 20 is equal to the rated power. Specifically, waveform 1 is a performance curve of a first electric motor with a diameter of 67 mm, that is, a conventional electric motor. Waveform 2 is a performance curve of a second electric motor with a diameter of 90 mm, that is, the electric motor disclosed in the present application. It can be seen from FIG. 20 that in a relatively wide coverage range of the rated power, when the rated power of the second electric motor is the same as that of the first electric motor, the weight of the second electric motor is less than the weight of the first electric motor. Therefore, the electric motor disclosed by the present application has a lighter weight on the premise of ensuring the performance so that the electric motor with a high power density and a high torque density is provided.

In conclusion, a relatively large armature diameter of the electric motor allows the electric motor to have a greater torque capacity, and the total mass of the electric motor is controlled to be relatively light in conjunction with the weight reduction design. With the two designs, the electric motor has a relatively high torque density and a relatively high power density so that the heavy load performance of the machine is improved and the weight of the whole machine is kept relatively light. Thus, the operation of the user is facilitated, and the electric motor has the advantages of miniaturization and a light weight.

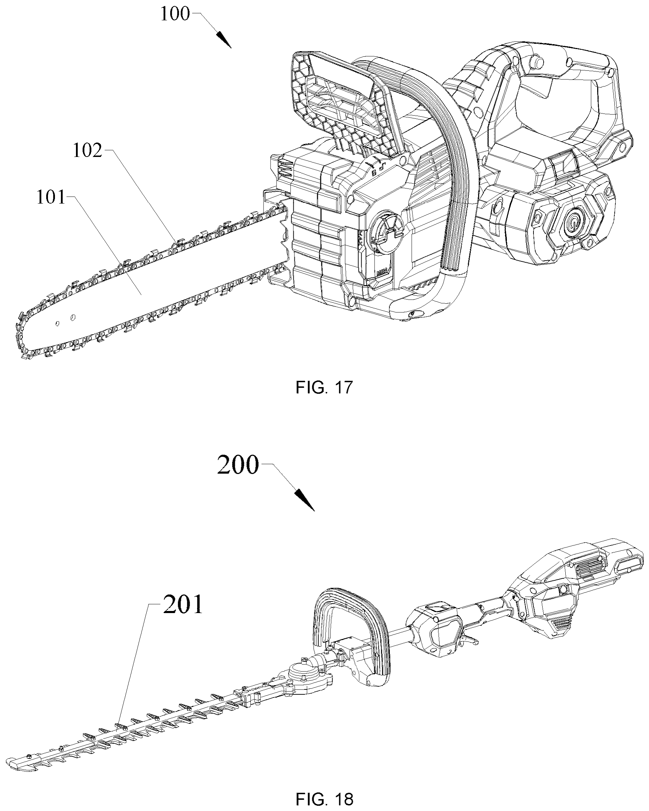

Referring to FIGS. 17 to 19, an example of the present application further provides a power tool. The power tool may be a handheld garden power tool such as a chainsaw 100, a pruner 200, or a handheld mower or may be an intelligent mower 300. The power tool includes the electric motor and the housing in any one of the preceding examples. The electric motor is at least partially disposed in the housing and is configured to power the power tool. The power tool further includes a power interface configured to be connected to a power supply device so as to supply electric energy to the electric motor. The power supply device may be a battery pack or an alternating current. It is to be noted that the electric motor in the present application is particularly applicable to handheld garden power tools.

The chainsaw 100 includes a guide plate 101 and a chain 102. The chain 102 is disposed around the guide plate 101, and the electric motor is configured to drive the chain 102 to rotate. Specifically, a sprocket is disposed on the output shaft of the electric motor, the chain 102 is disposed around the sprocket, and the electric motor drives the sprocket to rotate, thereby driving the chain 102 to rotate around the guide plate 101 and the sprocket. The pruner 200 includes a body and a cutting blade 201, and the electric motor can drive the cutting blade 201 to reciprocate. The intelligent mower 300 includes a mowing disc, the mowing disc is provided with a cutter, and the electric motor is configured to drive the mowing disc to rotate.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
a housing;
an electric motor at least partially disposed in the housing to power the power tool, wherein the electric motor comprises a stator and a rotor that rotates relative to the stator and is at least partially disposed on an outer side of the stator in a radial direction; and
a power interface configured to be electrically connected to a power supply device to supply electric energy to the electric motor;
wherein a diameter of the rotor is greater than or equal to 50 mm and less than or equal to 105 mm, and a ratio of a rated torque of the electric motor to a mass of the electric motor is higher than or equal to 4 N·m/kg.

2. The power tool according to claim 1, wherein the diameter of the rotor is greater than or equal to 80 mm and less than or equal to 95 mm, and the ratio of the rated torque of the electric motor to the mass of the electric motor is higher than or equal to 4 N·m/kg.

3. The power tool according to claim 1, wherein a rated power of the electric motor is greater than or equal to 1000 W and less than or equal to 7000 W.

4. The power tool according to claim 1, wherein the mass of the electric motor is greater than or equal to 0.8 kg and less than or equal to 2.4 kg.

5. The power tool according to claim 1, wherein the stator comprises a stator core and a first end cover, the first end cover is disposed at an end of the stator core, and the rotor is sleeved on the stator core.

6. The power tool according to claim 5, wherein a plurality of heat dissipation holes are provided on the first end cover.

7. The power tool according to claim 5, wherein a plurality of mounting holes are provided on the first end cover.

8. The power tool according to any one of claims 1 to 7, wherein the rotor comprises a rotor core and a second end cover, the second end cover is disposed at an end of the rotor core, the second end cover comprises a plurality of support legs, and the plurality of support legs are spaced apart about an axis of the rotor.

9. The power tool according to claim 8, wherein each of the plurality of support legs is provided with a weight reduction hole.

10. The power tool according to claim 8, wherein each of the plurality of support legs has a shape of a leaf blade and is provided with an air guide surface.

11. The power tool according to claim 8, wherein the second end cover comprises a support disc located in the middle and a support ring located outside the support disc, one end of each of the plurality of support legs is connected to the support disc, and the other end of each of the plurality of support legs is connected to the support ring.

12. The power tool according to claim 11, wherein an included angle between an extension direction of each of the plurality of support legs and a radial direction of the second end cover is greater than or equal to 0 degrees and less than or equal to 45 degrees.

13. The power tool according to claim 11, wherein each of the plurality of support legs extends along a straight line or a curve from the support disc to the support ring.

14. An electric motor applicable to power a power tool, wherein
the power tool comprises:
a power supply device configured to supply electric energy to the electric motor;
wherein the electric motor comprises a stator and a rotor that rotates relative to the stator and is at least partially disposed on an outer side of the stator; and
a diameter of the rotor is greater than or equal to 50 mm and less than or equal to 105 mm, and a ratio of a rated torque of the electric motor to a mass of the electric motor is higher than or equal to 4 N·m/kg.
